# EUROPÄISCHE PATENTANMELDUNG

(11) **EP 1 652 900 A1**
(43) Veröffentlichungstag der Anmeldung: **03.05.2006**
(21) Anmeldenummer: 05109810.1
(22) Anmeldetag: 21.10.2005
(51) Int. Cl.: C09J 7/02, C09J 11/04, G10K 11/162

(54) **Klebeband**

(30) Priorität: 26.10.2004 DE 102004051957
(71) Anmelder: Pelzer Acoustic Products Gmbh, D-58454 Witten (DE)
(72) Erfinder: Janzen, Stefan, 58435, Witten (DE); Mones, Roland, 50181, Bedburg (DE)
(74) Vertreter: Jönsson, Hans-Peter

(57) **Zusammenfassung**

Gegenstand der Erfindung ist ein Klebeband umfassend eine Klebeschicht und eine damit in flächigern Kontakt befindliche Deckschicht sowie die Verwendung des Klebebandes.

## Beschreibung

Gegenstand der Erfindung ist ein Klebeband umfassend eine Klebeschicht und eine damit in flächigem Kontakt befindliche Deckschicht sowie die Verwendung des Klebebandes.

Klebebänder sind in allen Bereichen der Technik seit langem bekannt. Bänder beispielsweise im Bauwesen weisen eine Masse im Bereich von etwa 100 bis 150 g/m² auf, die im Wesentlichen durch die Masse der Klebeschicht bestimmt wird. Die Deckschichten üblicher Klebebänder weisen üblicherweise ein Flächengewicht im Bereich von 20 bis 40 g/m² auf.

DE 1 816 161 U beschreibt eine Verbund-Dämmstoff-Bahn aus einem Trägermaterial, einer Lagedämpfungsmasse auf Bitumen- oder Kunststoffbasis zur Entdröhnung von Karosserieblechen im Automobilbau und einer Klebschicht. Es werden keine Angaben zu Flächengewichten oder zu einer Deckschicht gemacht.

CH 681973 A5 beschreibt eine geräuschmindernde Verkleidung für die Innenausstattung der Fahrgastkabinen von Fahrzeugen, die eine Vielzahl von Schichten aufweist, darunter eine Schwerschicht mit 2 bis 15 kg/m². Die geräuschmindernde Verkleidung kann gemäß CH 681973 A5 auf das Blech- oder Kunststoffteil des Kraftfahrzeugs aufgeschmolzen, aufgeklebt oder aufgelegt sein.

DE 31 17 368 A1 beschreibt eine flexible akustische Laminat-Konstruktion, die unter anderem eine Polymer-Schwerschicht aufweist und mit einem geeigneten Kleber verklebt werden kann.

JP 57085874 A beschreibt ein Klebeband zum Dämpfen von Geräuschen mit einer Haftklebemasse und Fasermaterialien.

DE 197 55 070 C2 beschreibt ein Dämmmaterial mit Schichtstruktur für den Innenausbau von Gebäuden, umfassend eine Papierschicht, eine Klebstoffschicht, eine Vliesschicht aus Hanf- und/oder Flachsfasern, wobei die Vliesschicht unter anderem ein Flächengewicht von mindestens 500 g pro m² hat.

DE 28 06 726 A beschreibt eine Dröhn-Schutzschicht für Fahrzeugböden. Diese wird an der Außenseite des Bodens angeordnet und enthält ein Elastomer, das im Wesentlichen aus Ethylen-Propylen-Kautschuk besteht. Als Füllstoffe werden wirksame mineralische Füllstoffe wie Talkum, Schiefermehl, Graphit, Glimmer oder Asbest genannt, die in einer Menge von 30 bis 70 Gew.-% enthalten sein können. Die beschriebene Schutzschicht wird auf den Fahrzeugboden in einer Stärke von 0,5 bis 3 mm entweder ungeschnitten, roh geschnitten oder vorgeformt und konturangepasst aufgebracht und mit dem Fahrzeugboden mittels eines an sich bekannten Vulkanisationsklebers oder eines Heißsiegelklebers dauerhaft verbunden.

DE 35 19 064 A beschreibt eine Schutzfolie gegen Steinschlag und vertritt hier die Auffassung, dass die hohen Füllstoffanteile dieser Folie (DE 28 06 726 A) die Festigkeiten der Folie reduzieren und bei kalandrierten Folien den so genannten Weißbruch begünstigen. DE 35 19 064 schlägt dem gegenüber eine mehrschichtige selbstklebende und tiefziehbare Schutzfolie insbesondere für Kraftfahrzeuge vor, die aus einer Trägerfolie besteht, die einen thermoplastischen Kunststoff auf der Basis Ethylen-Propylen-Dien-Terpolymer und/oder Ethylen-Propylen-Copolymer und Homo- und/oder Copolymer von Propylen, geringen Mengen an Füllstoffen und üblichen Zusatzstoffen, eine selbstklebende Haftschicht auf Basis von Acrylacrylaten und/oder Methacrylat und/oder copolymerisierbaren ethylenisch ungesättigten Monomeren, wie Acrylsäure und eine Abdeckschicht aus einer einseitig silikonisierten Polyolefinfolie auf der Haftschicht enthält.

Dem gegenüber besteht die Aufgabe der vorliegenden Erfindung darin, ein Klebeband bereitzustellen, dass bei einfacher Installation eine effektive Behinderung des Schalldurchgangs verschiedenster Bauteile bietet. Das Klebeband soll darüber hinaus einen flexiblen akustisch wirksamen Masseträger in abrollbarer Bandform oder vorkonfektionierter Plattenform auf Polymerbasis und Füllstoffen bereitstellen. Weitere Aufgabe eines entsprechenden Klebebandes ist die Verformbarkeit und damit die rissfreie, vorzugsweise dreidimensionale Anformbarkeit. Ein entsprechendes Klebeband sollte bedingt in Lauf- und Querrichtung dehnfähig, selbstklebend ausgerüstet, unter den üblichen relevanten Wasserbelastungen wasserdicht sowie wind- und dampfdicht sein und kann hilfsmittelfrei von Hand, vorzugsweise diagonal zur Laufrichtung teilbar sein.

Die vorgenannte Aufgabe wird gelöst durch ein Klebeband umfassend eine Klebeschicht einer bei Raumtemperatur klebefähigen Masse mit einem Flächengewicht im Bereich von 50 bis 300 g/m² und einer damit in flächigem Kontakt befindlichen Deckschicht mit einem Flächengewicht im Bereich von wenigstens 500 g/m².

Mit dem erfindungsgemäßen Klebeband wird ein Mittel bereitgestellt, das bei einfacher Installation eine effektive Behinderung des Schalldurchgangs verschiedener Bauteile bietet. Das Klebeband besteht somit aus einer schweren Deckschicht mit hohen Massegehalt und einem weitestgehend flexiblen und dauerhaft kalt-selbstklebenden Kleber für unterschiedliche jedoch übliche Untergründe.

Üblicherweise erfolgt der Einbau von Fenstern und Türen in Gebäuden unter Verwendung von Polyurethan-Montageschaum, wobei dieser primär als Montagehilfe eingesetzt wird. Häufig allerdings findet dieser PU-Montageschaum Einsatz für die gesamte Spaltüberbrückung zwischen Mauerwerk und Rahmen. Für die Winddichtung zwischen Mauerwerk und Rahmen werden häufig Klebebänder eingesetzt. Beide Arten der Abdichtung haben nur einen bedingten Einfluss auf den Schalldurchgang.

Mit Hilfe des erfindungsgemäßen Klebebands wird aufgrund der biegeweichen Masse des Bandes eine Reduzierung des Schalldurchgangs bei Fensteranschlüssen bei gleichzeitiger weitgehender Wind- und Luftdichtigkeit sowie Erfüllung der bauphysikalischen Anforderungen gewährleistet.

In einer bevorzugten Ausführungsform der vorliegenden Erfindung enthält die klebefähige Masse ein Verstärkungsgitter aus Glas, Polyolefinen, PES oder PVA um einerseits klebebedingten Kaltfluss zu minimieren und andererseits die hilfsmittelfreie Reißbarkeit zu erreichen.

Die im Sinne der vorliegenden Erfindung einzusetzenden Klebstoffe sind insbesondere kalt-selbstklebender Natur. Besonders bevorzugt im Sinne der vorliegenden Erfindung enthält die klebefähige Masse Polyacrylate, Ethylen-Phenyl-Acetate, Styrol-Butadien-Blockcopolymere, Styrol-Isopren-Blockcopolymere, Chloroprenkautschuk, Nitrilkautschuk, Butylkautschuk und/oder Klebeharze.

Die Schichtdicke der klebefähigen Masse kann in einer großen Breite variiert werden. Besonders bevorzugt im Sinne der vorliegenden Erfindung sind Klebebänder, bei denen die klebefähige Masse eine Schichtdicke von 0,05 bis 1 mm, insbesondere 0,1 bis 0,5 mm aufweist. Ist die Schichtdicke der klebefähigen Masse zu gering, so ist eine ausreichende Klebewirkung nicht unter allen Umständen gewährleistet. Wird jedoch die klebefähige Masse in einer zu großen Dicke auf die Deckschicht aufgetragen, so kann dies leicht zu Verschiebungen des eingebauten Klebebandes führen.

Besonders bevorzugt im Sinne der vorliegenden Erfindung beträgt das Flächengewicht der klebefähigen Masse 100 bis 200 g/m². Damit trägt auch das Gewicht der klebefähigen Masse zur akustischen Wirksamkeit des erfindungsgemäßen Klebebandes bei.

Die Deckschicht der erfindungsgemäßen Klebebänder besteht vorzugsweise aus einer hoch gefüllten PE- und/oder EVA-Schicht. EPDM, PU, PVC, PP, Polyester, Acrylate und/oder Bitumen ist unter anderem auch möglich. Diese kann, wie an sich aus dem Stand der Technik bekannt ist, übliche Weichmacher wie beispielsweise paraffinierte oder naphthenische Öle aber auch aromatische enthalten.

Als Füllstoffe kommen Quarzmehl, Kreide, Kaolin, Schwerspat, Holzmehl, Zellstoffmehl, Ruß oder feinteiliges Siliciumdioxid oder Silicat, Talkum, Schiefermehl, Graphit und/oder Glimmer in Betracht. Durch sorgfältige Auswahl dieser Füllstoffe nach Art und Menge können auch die Dämpfungseigenschaften der Schicht im Hinblick auf den Verlustfaktor in erwünschter Weise beeinflusst werden.

Wesentlich für die akustische Wirksamkeit der erfindungsgemäßen Klebebänder ist die Masse der Deckschicht, ausgedrückt durch das Flächengewicht, das besonders bevorzugt im Sinne der vorliegenden Erfindung im Bereich von 1,5 bis 6 kg/m² liegt. Hieraus resultiert ein Gesamt-Flächengewicht des Klebebandes aus Klebemasse und Deckschicht in einem Bereich von 550 bis 11000 g/m², insbesondere 600 bis 6000 g/m².

In einer weiteren bevorzugten Ausführungsform der vorliegenden Erfindung ist die freiliegende Fläche der klebefähigen Masse mit einer abziehbaren Abdeckschicht, insbesondere einer silikonisierten Folie oder silikonisiertem Papier abgedeckt.

Die freiliegende Fläche der Deckschicht kann beispielsweise eine Vlies- oder Gewebeabdeckung umfassen. Diese dient beispielsweise als Putzträger für den Fall des Einbaus der erfindungsgemäßen Klebebänder im Bausektor. Die oben genannte Vlies- oder Gewebeabdeckung sollte vorzugsweise ein Flächengewicht im Bereich von 10 bis 200 g/m² aufweisen.

Das erfindungsgemäße Klebeband kann universell in Bereichen eingesetzt werden, in denen eine akustische Wirksamkeit gefordert ist. Besonders bevorzugt im Sinne der vorliegenden Erfindung wird das Klebeband eingesetzt zur Luftabdichtung von Anschlüssen, insbesondere von Folien-Folien-Übergängen und -Anschlüssen, Folien-Baukörper-Übergängen und -Anschlüssen, Anschlüssen von Fenstern und Türen an Massivbauteilen, Abdichtungen von Rissen und Fugen, im Lautsprechergehäusebau sowie im Transportmittelbau, insbesondere im Kraftfahrzeugbau, als Bedämpfungsfolie für schwingende Elemente, beispielsweise Bleche und Blechkonstruktionen, auch zum Korrosionsschutz bei Metalldeckungen, insbesondere bei Titan-Zink-Blechen für Dacheindeckungen.

### Ausführungsbeispiele

Auf ein Endlosband einer 15 cm breiten und 0,5 mm dicken Schwerfolie eines Polymergemisches aus Polyethylen und Ethylen-Vinylacetat im Verhältnis von 50 : 50, die mit 70 Gew.-% mineralisch gefüllt war und dementsprechend ein Flächengewicht von 800 g/m² aufwies, wurde ein handelsüblicher Acrylatkleber mit einer Schichtdicke von 0,15 und einem Flächengewicht von 140 g/m² aufgebracht.

Die akustischen Eigenschaften des erfindungsgemäßen Klebebandes wurden untersucht. Hierbei wurde festgestellt, dass die relative Luftschalldämmung des erfindungsgemäßen Klebebandes mit der Schlitz-/ Spaltbreite der zu bedeckenden Abstände zunahm. Je breiter der zu verschließende Schlitz/Spalt war, desto höher war die Verbesserung der Luftschalldämmung des erfindungsgemäßen Akustikbandes gegenüber einem handelsüblichen Klebeband mit geringer Dichte.

Mit zunehmender Spaltbreite startete die bessere Luftschalldämmung des erfindungsgemäßen Klebebandes gegenüber dem handelsüblichen Klebeband bei tieferen Frequenzen und nahm zu hohen Frequenzen zu.

Vergleicht man die abgeklebten Spalten verschiedener Spaltbreiten, so ergab sich beim Band des Stands der Technik ein erheblicher Einfluss bis zu 5 dB auf das Schalldämmmaß. Bei einem erfindungsgemäßen Klebeband hingegen betrug dieser Einfluss nur ca. 1 dB.

Die Berechnung der Variation der Dicke des erfindungsgemäßen Bandes zeigte, dass die aktuelle Wahl der Dicke und damit der Dichte ausreichend ist. Eine dünnere Variante würde die Luftschalldämmung deutlich reduzieren. Hingegen eine dickere Variante würde die Luftschalldämmung noch etwas verbessern doch auch die Flexibilität des Klebebandes reduzieren sowie den Preis erhöhen.

## Patentansprüche

1. Klebeband umfassend eine Klebeschicht einer bei Raumtemperatur klebefähigen Masse mit einem Flächengewicht im Bereich von 50 bis 300 g/m²und eine damit in flächigem Kontakt befindliche Deckschicht mit einem Flächengewicht im Bereich von wenigstens 500 g/m².

2. Klebeband nach Anspruch 1, **dadurch gekennzeichnet, dass** die klebefähige Masse Polyacrylate, Ethylen-Vinyl-Acetate, Styrol-Butadien-Blockcopolymere, Styrol-Isopren-Blockcopolymere, Chloroprenkautschuk, Nitrilkautschuk, Butylkautschuk und/oder Klebeharze enthält sowie eine Schichtdicke von 0,05 bis 1 mm, insbesondere 0,1 bis 0,5 mm aufweist.

3. Klebeband nach Anspruch 1 oder 2, **dadurch gekennzeichnet, dass** die klebefähige Masse ein Flächengewicht von 50 bis 300, insbesondere 100 bis 200 g/m² aufweist.

4. Klebeband nach einem der Ansprüche 1 bis 3, **dadurch gekennzeichnet, dass** die Deckschicht aus einer Schwerschicht aus einer hochgefüllten Polymerschicht besteht

5. Klebeband nach einem der Ansprüche 1 bis4, **dadurch gekennzeichnet, dass** die freiliegende Fläche der klebefähigen Masse eine abziehbare Abdeckschicht, insbesondere aus silikonisierter Folie oder silikonisiertem Papier umfasst.

6. Klebeband nach einem der Ansprüche 1 bis 5, **dadurch gekennzeichnet, dass** die freiliegende Fläche der Deckschicht eine Vlies- oder Gewebeabdeckung umfasst.

7. Klebeband nach einem der Ansprüche 1 bis 6, **dadurch gekennzeichnet, dass** die Deckschicht ein Flächengewicht im Bereich von 1,5 kg/m² bis 6 kg/m² aufweist.

8. Klebeband nach einem der Ansprüche 1 bis 7, **dadurch gekennzeichnet, dass** das Gesamtflächengewicht des Klebebandes aus Klebemasse und Deckschicht einen Wert im Bereich von 550 bis 11.000 g/m², insbesondere 600 bis 6.000 g/m² umfasst.

9. Klebeband nach Anspruch 6, **dadurch gekennzeichnet, dass** die Vlies- oder Gewebeabdeckung ein Flächengewicht im Bereich von 10 bis 200 g/m² aufweist.

10. Klebeband nach einem der Ansprüche 1 bis 9, **dadurch gekennzeichnet, dass** die klebefähige Masse ein Verstärkungsgitter enthält.

11. Verwendung des Klebebandes nach einem der Ansprüche 1 bis 10 zur Luftabdichtung von Anschlüssen, insbesondere von Folie-Folien-Folien-Übergängen und -Anschlüssen, Folien-Baukörper-Übergängen und -Anschlüssen, Anschlüssen von Fenstern und Türen an Massivbauteile, Abdichtungen von Rissen und Fugen, im Lautsprechergehäusebau sowie im Transportmittelbau, insbesondere im Kraftfahrzeugbau, als Bedämpfungsfolie für schwingende Elemente, beispielsweise Bleche und Blechkonstruktionen, auch zum Korrosionsschutz bei Metalldeckungen, insbesondere bei Titan-Zink-Blechen für Dacheindeckungen.
